# Europäisches Patentamt
## European Patent Office
## Office européen des brevets

(19)

(11) Veröffentlichungsnummer: **0 163 079**
**B1**

(12) # EUROPÄISCHE PATENTSCHRIFT

(45) Veröffentlichungstag der Patentschrift:
10.08.88

(51) Int. Cl.⁴: **A 01 K 5/02**

(21) Anmeldenummer: **85104360.4**

(22) Anmeldetag: **11.04.85**

(54) Fütterungseinrichtung für pumpfähiges Viehfutter.

(30) Priorität: **26.05.84 DE 3419840**

(43) Veröffentlichungstag der Anmeldung:
**04.12.85 Patentblatt 85/49**

(45) Bekanntmachung des Hinweises auf die Patenterteilung:
**10.08.88 Patentblatt 88/32**

(84) Benannte Vertragsstaaten:
**CH DE GB LI NL SE**

(56) Entgegenhaltungen:
**DE-A-2 620 686**
**DE-B-1 782 086**
**DE-B-2 025 209**

(73) Patentinhaber: **WEDA- Dammann & Westerkamp GmbH, D-2849 Goldenstedt 2 - Lutten (DE)**

(72) Erfinder: **Fahlbusch, Klaus, Paul Keller Strasse 19, D-2848 Vechta i.O. (DE)**

(74) Vertreter: **Busse & Busse Patentanwälte, Postfach 1226 Grosshandelsring 6, D-4500 Osnabrück (DE)**

EP 0 163 079 B1

LIBER, STOCKHOLM 1988

## Beschreibung

Die Erfindung bezieht sich auf eine Fütterungseinrichtung für pumpfähiges Viehfutter gemäß dem Oberbegriff des Anspruchs 1.

Bekannte Einrichtungen dieser Art (DE-PS-2 025 209) sind nicht nur in der Lage, sehr genau zusammengesetzte Futtermischungen zuzubereiten, sondern auch exakt dosierte Futterportionen über die Auslaßventile an die Futtertröge abzugeben. Die Abgabe des Futters an die Futtertröge kann dabei in mehreren, über den Tag verteilten Fütterungsperioden vorgenommen werden.

Während bei Einzelhaltung die Zudosierung von Futter individuell leicht optimiert werden kann, zeigt sich bei Gruppenhaltung und -futterversorgung von Tieren, insbesondere von Schweinen, daß aufgrund der sich einstellenden Rangordnungsverhältnisse die größeren und stärkeren Tiere verhältnismäßig zu viel und die schwächere Tiere verhältnismäßig zu wenig Futter erhalten können. Verstärkt wird diese Erscheinung durch die auf einmal erfolgende Verabreichung der Futtermenge je Fütterungsperiode.

Es ist ferner eine Einrichtung zum Füttern von Vieh mit pumpfähigem Futter bekannt (DE-OS-2 620 686), die eine "ad libitum"- Fütterung ermöglicht, bei der die Tiere Futter zu jeder Zeit und in jeder beliebigen Menge aufnehmen können. Im Futtertrog ist dabei eine Füllstandsanzeigevorrichtung mit Minimal- und Maximalanzeige vorgesehen, welche ein Auslaufventil zu dem jeweiligen Futtertrog betätigt. Da der Trog sich nie leert, können z. B. durch Säuerungen unerwünschte Veränderungen im Futter eintreten. Aufgrund des Spieltriebes der Tiere, insbesondere von Schweinen, sind auch Futterverluste nicht auszuschließen. Insbesondere aber zeigt sich, daß eine gewisse Oberfettung der Tiere eintritt, die unerwünscht ist.

Der Erfindung liegt die Aufgabe zugrunde, eine Einrichtung der im Oberbegriff des Anspruchs 1 angegebenen Art zu schaffen, die bei besonders einfacher und preisgünstiger Ausbildung eine günstigere Futteraufnahme durch in Gruppen gehaltene Tiere ermöglicht.

Die Erfindung löst diese Aufgabe mit den Merkmalen des kennzeichnenden Teils des Anspruchs 1. Hinsichtlich einer weiteren Ausgestaltung wird auf den Anspruch 2 verwiesen.

Die erfindungsgemäße Fütterungseinrichtung ermöglicht bei sehr einfacher Ausgestaltung, die insbesondere auch für kleinere Stallanlagen in Betracht kommt, eine besondere Fütterungsweise, bei der nicht nur die Futterzuführ zu den Futtertrögen in mehrere Fütterungsperioden aufgeteilt ist, sondern die Futterzuteilung innerhalb der Fütterungsperioden in mehreren Umläufen erfolgt, die durch den Freigabezyklus der Folgeschaltung vorgegeben werden. Dabei bestimmen die Tiere durch ihr Freßverhalten unmittelbar selbst die Menge, die ihnen während einer Fütterungsperiode an Futter zugeteilt wird. Denn nur dann, wenn nach dem ersten Freigabezyklus bzw. Fütterungsumlauf die Tiere ihren Trog soweit geleert haben, daß der untere abgefragte Grenzwert des Füllstandes unterschritten wird, erhält dieser Futtertrog beim nächsten Freigabezyklus eine Futterzuteilung. Wurde der untere Füllstand noch nicht erreicht, wird dieser Futtertrog übersprungen. Der Abstand zwischen aufeinanderfolgenden Freigabezyklen kann so gestaltet werden, daß der zweite und dritte oder auch jeder weitere Zyklus erst beginnt, wenn erfahrungsgemäß zumindest ein Teil der versorgten Futtertröge leergefressen ist. Dies hat den Vorteil, daß die starken Tiere, die zunächst an den Futtertrog gekommen sind, sich nach Leerung des Futtertroges abwenden von diesem und ein geringeres Bestreben zeigen, an diesen zurückzukehren, so daß bei erneutem Füllen des Troges auch schwächere Tiere früher eine Chance erhalten, an den Futtertrog zu gelangen. Die erzwungenen Futteraufnahmepausen zwischen den Freigabezyklen innerhalb einer Fütterungsperiode regulieren überraschend die Futteraufnahme, wobei gleichzeitig sichergestellt ist, daß alle Tiere sich innerhalb der Fütterungsperiode vollständig sattfressen können.

Darüber hinaus können die Futtertröge verkleinert werden, was insbesondere für den Raumbedarf in kleineren Stallungen erwünscht ist. Auch der Futteranmischbehälter kann relativ sehr klein ausgeführt werden, da während einer Fütterungsperiode genügend Zeit zur Verfügung steht, um eine mehr- bzw. vielfache Anmischung von Futterchargen vorzunehmen. Dadurch verkleinert sich auch die Menge, die im Anmischbehälter gegebenenfalls für die Zeitspanne zwischen zwei Fütterungsperioden Zurückbleibt.

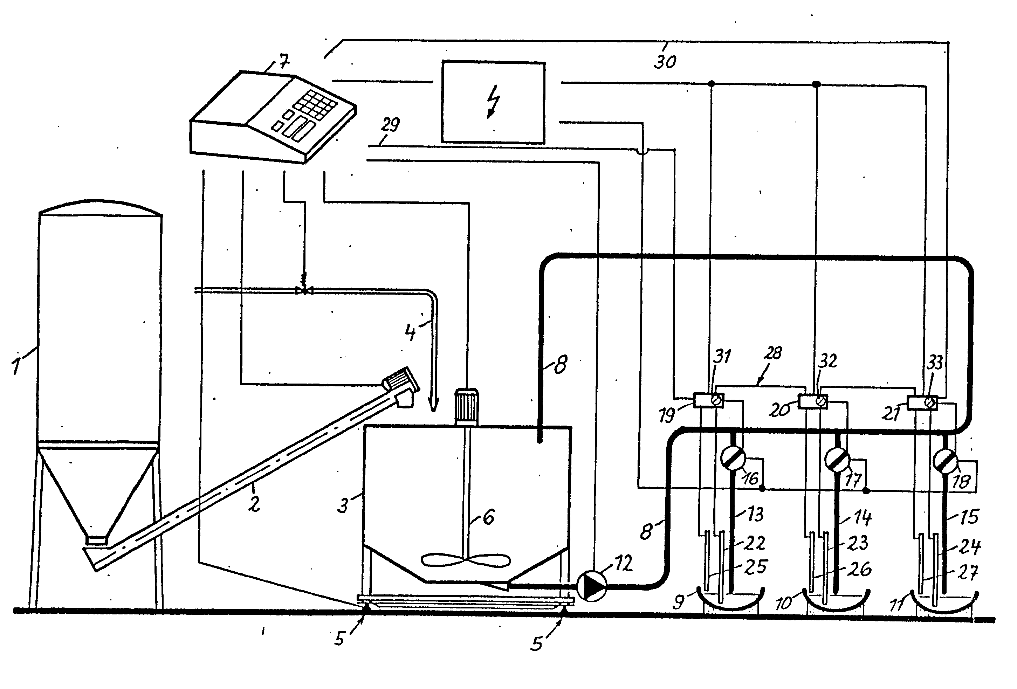

Weitere Vorteile und Einzelheiten ergeben sich aus der Beschreibung und der Zeichnung, in der ein Ausführungsbeispiel des Gegenstands der Erfindung schematisch näher veranschaulicht ist.

Die Fütterungseinrichtung umfaßt ein oder mehrere Vorratsbehälter 1 für Trockenfutterbestandteile mit einem Förderaggregat 2 zur Beschickung eines Futteranmischbehälters 3. In den Futteranmischbehälter 3 mündet außerdem eine Zuleitung 4, durch die z. B. Wasser oder irgendeine sonstige Flüssigkeit zuführbar ist. Dem Futteranmischbehälter 3 ist eine Wiegevorrichtung 5 und ein Rührwerk 6 sowie eine Zentralsteuervorrichtung 7 zugeordnet, so daß eine automatische, mengenrichtige und verhältnisgerechte Anmischung von Flüssigfutterportionen ermöglicht ist. Der Futteranmischbehälter 3 kann sehr klein ausgeführt werden, da, wie nachfolgend noch erläutert wird, auch eine ergänzende Chargenanmischung während einer Fütterungsperiode möglich ist.

Im unteren Bereich des Futteranmischbehälters 3 tritt eine Ringleitung 8 aus, die in der Nähe einer beliebigen Anzahl von Futtertrögen 9, 10 und 11 vorbeigeführt ist und oben in den Futteranmischbehälter 3 wieder einmündet. Durch die Ringleitung 8 kann mittels einer Futterpumpe 12 Futter gefördert, auch im Kreislauf umgepumpt werden. Zu jedem der Futtertröge 9, 10, 11 führt eine an die Ringleitung 8 angeschlossene Abzweigleitung 13, 14, 15, die mit je einem elektrisch gesteuerten Auslaßventil 16, 17, 18 versehen ist. Jedes Auslaßventil 16, 17, 18 ist an ein gesondertes Schaltgerät 19, 20, 21 angeschlossen, dem jeweils eine untere und eine obere, in den zugehörigen Trog 9, 10, 11 hineinragende Füllstandssonde 22, 23, 24 bzw. 25, 26, 27 zugeordnet ist. Die Schaltgeräte 19, 20, 21 bilden Teil einer Folgeschaltung 28, mittels der, beginnend mit dem in Strömungsrichtung des Futters in der Ringleitung 8 ersten Schaltgerät 19, aufeinanderfolgend die Auslaufventile 16, 17, 18 in Abhängigkeit von den jeweils zugeordneten Füllstandssonden 22, 23, 24; 25, 26, 27 freigebbar sind. Das erste Schaltgerät 19 ist mit der Zentralsteuervorrichtung 7 durch eine Freigabesignalleitung 29 und das letzte Schaltgerät 21 über eine Rückmeldeleitung 30 mit der Zentralsteuervorrichtung 7, verbunden.

Jedes Schaltgerät 19, 20, 21 umfaßt einen Trennschalter 31, 32, 33, mit dem das jeweilige Schaltgerät aus der Folgeschaltung 28 ausblendbar ist. Die Zentralsteuervorrichtung 7 die auch zur Steuerung aller übrigen Antriebs- und Funktionsteile dient, umfaßt vorzugsweise einen programmierbaren Prozeßrechner.

Die Fütterungseinrichtung kann durch die Zentralsteuervorrichtung 7 zu vorprogrammierbaren Fütterungszeiten in Betrieb genommen werden. Dazu wird zunächst der Futteranmischbehälter 3 mit den für eine Futtercharge benötigten Mengen an Futterbestandteilen beschickt, wobei die Futterzulaufdosierung durch die Zentralsteuervorrichtung 7 aufgrund der von der Wiegevorrichtung 5 jeweils übermittelten Meßwerte erfolgt. Anschließend oder schon während des Futterzulaufs wird die Futtercharge im Futteranmischbehälter 3 mittels des Rührwerks 6 aufbereitet. Danach wird zu Homogenisierungszwecken das aufbereitete Futter mittels der Futterpumpe 12 durch die Ringleitung 8 im Kreislauf umgepumpt, wobei eine Vermischung des Futters der frisch zubereiteten Futtercharge mit einem noch aus einer vorangehenden Fütterungsperiode in der Ringleitung 8 verbliebenen Restfutter eintritt.

Nach Beendigung des Umpumpvorganges wird das erste Auslaßventil 16 durch einen Schaltimpuls über die Freigabeleitung 29 freigegeben Befindet sich der Futterpegel im Futtertrog 9 unterhalb der unteren Füllstandssonde 22, so wird das Auslaßventil 16 geöffnet und bleibt solange offen, bis das in den Futtertrog 9 eintretende Futter mit seinem Niveau die obere Füllstandssonde 25 erreicht.

Bei Erreichen dieses Zustands schließt das Schaltgerät 19 das Auslaßventil 16 und gibt ein Freigabesignal an das Schaltgerät 20 weiter. In analoger Weise wird nun dem Futtertrog 10 durch Öffnen des Auslaßventils 17 Futter solange zugeteilt, bis der Pegel des Futters die obere Füllstandssonde 26 erreicht, das Auslaßventil 17 geschlossen wird und das Schaltgerät 20 ein Freigabesignal an das Schaltgerät 21 liefert. Wenn der in Strömungsrichtung des Futters in der Ringleitung 8 letzte Futtertrog 11 mit Futter versorgt ist, übermittelt das Schaltgerät 21 der Zentralsteuervorrichtung 7 über die Rückmeldeleitung 30 ein Rückmeldesignal als Endanzeige für den ersten Fütterungszyklus. Für den oder die weiteren vorprogrammierten Fütterungszyklen je Fütterungsperiode wird dem ersten Schaltgerät 19 nun sofort oder zeitverzögert über die Freigabeleitung 29 ein erneutes Freigabesignal zugeführt. Ist im Falle der erneuten Freigabe der Futterpegel im Futtertrog 9 noch nicht unter die untere Füllstandssonde 22 abgesunken, wird ohne Öffnen des Auslaßventils 16 sofort ein Freigabesignal auf das nachfolgende Schaltgerät 20 gegeben. Ist dagegen der Futterpegel im Futtertrog 9 auf eine Höhe unterhalb der unteren Füllstandssonde 18 abgesunken, so wird der Futtertrog 9 wie bereits beschrieben aufgefüllt. Entsprechend läuft der Fütterungszyklus für die weiteren Futtertröge 10, 11 ab. Mittels eines Trennschalters 31, 32, 33 können wahlweise bestimmte Schaltgeräte aus der Folgeschaltung 28 ausgeblendet werden, z. B. wenn einzelne Futtertröge nicht mit Futter beschickt werden sollen. In diesem Fall wird das dieses Schaltgerät erreichende Freigabesignal sofort an das nachfolgende Schaltgerät weitergeleitet.

Wenn während eines Fütterungszyklus bzw. -umlaufs der Futteranmischbehälter 3 leer wird, wird das gerade geöffnete Auslaufventil geschlossen, wobei jedoch die Freigabe für das betreffende Schaltgerät erhalten bleibt. Nach erneutem Aufbereiten und kurz zeitigen Umpumpen der Futtermischung wird dann der Fütterungszyklus durch erneutes Öffnen des vorübergehend geschlossenen Auslaßventils fortgesetzt.

Der Zentralsteuervorrichtung 7 können beliebig wählbare Fütterungsperioden pro Tag und ebenso eine beliebig wählbare Zahl an Fütterungszyklen pro Fütterungsperiode vorgegeben werden.

Die Füllstandssonden in den Futtertrögen sind einzeln höhenverstellbar, so daß die Lage des unteren bzw. oberen Futterpegels im Futtertrog und die Differenzmenge individuell einstellbar sind.

## Patentansprüche

1. Fütterungseinrichtung für pumpfähiges Viehfutter, bestehend aus einem mit einer Wiegevorrichtung (5) und einem Rührwerk (6) versehenen, aus Vorratsbehältern (1) mit Futterbestandteilen beschickbaren Futteranmischbehälter (3), einer aus dem Anmischbehälter (3) aus- und in diesen wieder einmündenden Ringleitung (8) für Futter, die eine Futterpumpe (12) und eine Mehrzahl von je zu einem Futtertrog (9, 10 11) führenden Abzweigleitungen (13, 14, 15) mit je einem elektrisch gesteuerten Auslaßventil (16, 17, 18) umfaßt, und aus einer Zentralsteuervorrichtung (7) zur Steuerung der Aufbereitung von Futter im Futteranmischbehälter (3), der Pumpenförderung des Futters entlang der Ringleitung (8) und des Auslaßventils (16) der ersten der entlang der Ringleitung (8) vorgesehenen Abzweigleitungen (13, 14, 15), dadurch gekennzeichnet, daß jedem Auslaßventil (16, 17, 18) ein an eine untere und an eine obere Füllstandssonde (22, 23, 24; 25, 26, 27) im zugehörigen Futtertrog (9, 10, 11) angeschlossenes Schaltgerät (19, 20, 21) zugeordnet ist, sämtliche Schaltgeräte (19, 20, 21) Teil einer Folgeschaltung (28) bilden, mittels der die Schaltgeräte, beginnend mit dem in Strömungsrichtung des Futters in der Ringleitung (8) ersten Schaltgerät, aufeinanderfolgend für eine Betätigung der Auslaßventile in Abhängigkeit von den Füllstandssonden freigebbar sind, und die Folgeschaltung zur Einleitung eines Freigabezyklus an die Zentralsteuervorrichtung (7) angeschlossen ist.

2. Einrichtung nach Anspruch 1, dadurch gekennzeichnet, daß jedes Schaltgerät (19, 20, 21) mittels eines Trennschalters (31, 32, 33) für sich aus der Folgeschaltung (28) ausblendbar ist.

## Claims

1. A feeding device for pumpable cattle fodder, consisting of a fodder mixing tank (3) which is provided with a weighing device (5) and an agitator (6) and which can be charged with fodder components from storage bins (1), of a ring conduit (8) for fodder which leads out of the mixing tank (3) and back into this again and which comprises a fodder pump (12) and a plurality of branch conduits (13, 14, 15) each leading to a feeding trough (9, 10, 11) and each having an electrically controlled outlet valve (16, 17, 18) and of a central control device (7) for controlling the preparation of fodder in the fodder mixing tank (3), the pump conveying of the fodder along the ring conduit (8) and the outlet valve (16) of the first of the branch conduits (13, 14, 15) provided along the ring conduit (8), characterised in that associated with each outlet valve (16, 17, 18) is a switching device (19, 20, 21) connected to a lower and an upper level probe (22, 23, 24; 25, 26, 27) in the associated feeding trough (9, 10, 11), all the switching devices (19, 20, 21) form part of a sequence control (28) by means of which the switching devices, beginning with the first switching device in the direction of flow of the fodder in the ring conduit (8), can be released successively for actuation of the outlet valves depending on the level probes, and the sequence control is connected to the central control device for the initiation of a release cycle.

2. A device according to claim 1, characterised in that each switching device (19, 20, 21) can be cut out of the sequence control (28) individually by means of a disconnecting switch (31, 32, 33).

## Revendications

1. Installation de distribution d'aliments pour le bétail aptes à être pompés, comprenant une cuve de mélange (3) pourvue d'un dispositif de pesage (5) et d'un agitateur (6) et pouvant être chargée de constituants alimentaires à partir de réservoirs (1), une conduite circulaire (8) pour les aliments qui part de la cuve de mélange (3) et y revient et qui comporte une pompe à aliments (12) et plusieurs conduites de branchement (13, 14, 15) menant chacune à une auge (9, 10, 11) et pourvues chacune d'une valve de débit (16, 17, 18) commandée électriquement, et un dispositif de commande central (7) commandant la préparation d'aliments dans la cuve de mélange (3), le transport des aliments par pompage dans la conduite circulaire (8) et par la valve de débit (16) de la première des conduites de branchement (13, 14, 15) prévues le long de la conduite circulaire (8), caractérisée en ce qu'à chaque valve de débit (16, 17, 18) est associé un dispositif de commutation (19, 20, 21) connecté à une sonde de niveau de remplissage inférieure et à une sonde de niveau de remplissage supérieure (22, 23, 24; 25, 26, 27) prévues dans l'auge (9, 10, 11) correspondante, tous les dispositifs de commutation (19, 20, 21) font partie d'un circuit de mise en séquence (28) au moyen duquel, en vue de l'actionnement des valves de débit en fonction des sondes de niveau de remplissage, les dispositifs de commutation peuvent être activés successivement, en commençant par le dispositif de commutation qui est le premier dans le sens de la circulation des aliments dans la conduite circulaire (8), et le circuit de mise en séquence est connecté à un dispositif de commande central (7) pour amorcer un cycle d'activation

2. Installation suivant la revendication 1, caractérisée en ce que chaque dispositif de commutation (19, 20, 21) peut être extrait isolément du circuit de mise en séquence (28) au moyen d'un interrupteur (31, 32, 33).

0 163 079